# EUROPÄISCHE PATENTANMELDUNG

(11) **EP 0 673 176 A1**
(43) Veröffentlichungstag der Anmeldung: **20.09.1995**
(21) Anmeldenummer: 95103174.9
(22) Anmeldetag: 06.03.1995
(51) Int. Cl.: H04Q 7/34

(54) **Verfahren zur Mobilstationferndiagnose**

(30) Priorität: 16.03.1994 DE 4409012
(71) Anmelder: SIEMENS AKTIENGESELLSCHAFT, D-80333 München (DE)
(72) Erfinder: Fenske, Horst, Dipl.-Ing., D-80992 München (DE)

(57) **Zusammenfassung**

Zur Feststellung der Ursache unzureichender Übertragungsqualität ist vorgesehen, daß der Mobilteilnehmer eine spezielle Service-Nummer des Netzbetreibers anwählt, woraufhin eine Messung der für die Diagnose ausgewählten Parameter vorgenommen und deren Ergebnis der Mobilstation mitgeteilt wird.

## Beschreibung

Die Erfindung bezieht sich auf ein Verfahren zur Mobilstation-Ferndiagnose in einem Mobilfunksystem.

Die Qualität der Übertragung in einem Mobilfunksystem ist von vielen Parametern abhängig. Dazu zählen neben der Funktionsfähigkeit, d.h. dem spezifikationsgemäßen Zustand von Mobil- und Basisstation auch folgende Faktoren: Empfangsfeldstärke bei Mobil- und Basisstation, Nachbar- und Gleichkanalstörungen, Fadingprofil der Umgebung, Fahrzeuggeschwindigkeit, Qualität der Drahtleitungen incl. B-Teilnehmergerät, Verzögerungszeit des Gesamtsystems und Qualität der Echosperren. Dies führt in der Regel dazu, daß ein Mobilteilnehmer nicht entscheiden kann, ob sein Gerät defekt ist und zum Service gebracht werden sollte oder ob es sich um ein Übertragungsproblem oder gar um ein Problem auf der Netzseite handelt.

Abhilfe kann hierbei die Einrichtung von hot lines bringen, an die sich der Kunde im Zweifelsfall wenden kann. Da dort jedoch nur in verhältnismäßig wenigen Fällen eine ausreichende Diagnose gestellt werden kann, wird der Service mit Reparaturaufträgen an fehlerhaften Geräten belastet.

Der Erfindung liegt die Aufgabe zugrunde, eine Lösung anzugeben, mit der ein Mobilteilnehmer die Ursache unzureichender Übertragungsqualität diagnostizieren kann.

Diese Aufgabe wird gemäß der Erfindung in der Weise gelöst, daß der Mobilteilnehmer eine hierfür vorgesehene spezielle Service-Nummer des Netzbetreibers anwählt und daß daraufhin eine Messung der für die Diagnose ausgewählten Parameter vorgenommen und deren Ergebnis der Mobilstation mitgeteilt wird.

Vorteilhafte Ausgestaltungen und Weiterbildungen des Erfindungsgegenstands sind in den Unteransprüchen angegeben.

Nachstehend wird die Erfindung anhand der Mobilstation-Ferndiagnose im D-Netz näher erläutert. Dabei ist zu erwähnen, daß GSM-Geräte, also für die Verwendung im D-Netz vorgesehene Mobilfunkgeräte grundsätzlich für eine Ferndiagnose vorbereitet sind. Die Geräte verfügen über einen loop back modus, in den sie durch ein Kommando über die Funkschnittstelle gebracht werden können. Dieser Modus dient bei der ITA/FTA zur Durchführung der Zulassungsmessungen und deckt alle Funktionen von der Antenne bis zur Schnittstelle Channel-Codec/Voice-Codec ab. Audio und Vocoder-, MMI-, Mechanik-, Temperatur-, Chipkarten- und Stromversorgungstests müssen separat durchgeführt werden. Über die Luftschnittstelle lassen sich somit durch Steuerung über die Basisstation sämtliche L2- und L3-Tests sowie L1-Tests mit Einschränkungen bei Empfindlichkeit, absoluter Leistung und Nachbarkanalstörung durchführen. Ein separater Audio-Test in Form eines audio loop back mit Beurteilung durch den Benutzer, der sich selbst laut und unverzerrt, jedoch verzögert hört, ist am Anfang der Testreihe einzubringen.

Der Test wird vom Netzbetreiber als Dienstleistung angeboten. Die Mobilstation-Ferndiagnose erfolgt in der Weise, daß der Mobilteilnehmer eine hierfür vorgesehene spezielle Service-Nummer des Netzbetreibers anwählt und daraufhin eine Messung der für die Diagnose ausgewählten Parameter vorgenommen wird. Das Ergebnis dieser Messung wird der Mobilstation bzw. dem Mobilteilnehmer mitgeteilt. Dies kann auf akustischem Wege (Sprachnachricht) erfolgen, durch eine SMS-Nachricht (Short Message Service) oder aber auch durch einen schriftlichen Testbericht. Einrichtungen zur Durchführung der Ferndiagnose sind in einer Feststation des Mobilfunksystems installiert und können zentral gesteuert sein. Dabei wird in vorteilhafter Weise zur Durchführung der Ferndiagnose in der betreffenden Feststation vorhandene Soft- und Hardware verwendet. Zur Gewährleistung einer einwandfreien Funktion des Tests begibt sich der Teilnehmer in ein bestimmtes, durch die betreffende Basisstation gut versorgtes Gebiet und wählt dann die Test-Telefonnummer, d.h. die Service-Nummer des Netzbetreibers an. Über DTMF (Dual Tone Multi Frequency) kann aus verschieden langen Testszenarien ausgewählt werden. Damit läßt sich der Umfang eines Testprogramms vom Mobilteilnehmer selbst bestimmen.

## Patentansprüche

1. Verfahren zur Mobilstation-Ferndiagnose in einem Mobilfunksystem, dadurch **gekennzeichnet,** daß der Mobilteilnehmer eine hierfür vorgesehene spezielle Service-Nummer des Netzbetreibers anwählt und daß daraufhin eine Messung der für die Diagnose ausgewählten Parameter vorgenommen und deren Ergebnis der Mobilstation mitgeteilt wird.

2. Verfahren nach Anspruch 1, dadurch **gekennzeichnet,** daß Einrichtungen zur Durchführung der Ferndiagnose in einer Feststation des Mobilfunksystems installiert sind.

3. Verfahren nach Anspruch 2, dadurch **gekennzeichnet,** daß dieEinrichtungen zur Durchführung der Ferndiagnose zentral gesteuert sind.

4. Verfahren nach Anspruch 3, dadurch **gekennzeichnet,** daß zur Durchführung der Ferndiagnose in der betreffenden Feststation vorhandene Soft- und Hardware verwendet wird.

5. Verfahren nach einem der Ansprüche 1 bis 4, dadurch **gekennzeichnet,** daß sich die Mobilstation zur Durchführung der Ferndiagnose in einem durch eine Basisstation funktechnisch gut versorgten Gebiet aufhält.

6. Verfahren nach einem der Ansprüche 1 bis 5, dadurch gekennzeichnet, daß durch Benutzersignalisierung (z.B. DTMF - Dual Tone Multi Frequency, Spracherkennung, SMS) eine Auswahl aus unterschiedlich langen Testszenarien erfolgt.

7. Verfahren nach einem der Ansprüche 1 bis 6, dadurch **gekennzeichnet,** daß das Ergebnis der Ferndiagnose der Mobilstation akustisch mitgeteilt wird.

8. Verfahren nach einem der Ansprüche 1 bis 6, dadurch **gekennzeichnet,** daß das Ergebnis der Ferndiagnose der Mobilstation durch optische Anzeige (z.B. SMS = Short Message Service) mitgeteilt wird.

9. Verfahren nach einem der Ansprüche 1 bis 6, dadurch **gekennzeichnet,** daß das Ergebnis der Ferndiagnose der Mobilstation in einem schriftlichen Testbericht mitgeteilt wird.
